# EUROPÄISCHE PATENTSCHRIFT

(11) **EP 0 342 339 B1**
(45) Veröffentlichungstag und Bekanntmachung des Hinweises auf die Patenterteilung: **01.06.1994**
(21) Anmeldenummer: 89105414.0
(22) Anmeldetag: 28.03.1989
(51) Int. Cl.: B05D 1/02, C02F 1/52

(54) **Lackentklebungs- und Sedimentationsmittel**
Paint de-tackifier and sedimentation agent
Moyen de dénaturation et de sédimentation des peintures

(30) Priorität: 20.05.1988 DE 3817251
(43) Veröffentlichungstag der Anmeldung: 23.11.1989
(73) Patentinhaber: RWE-DEA Aktiengesellschaft für Mineraloel und Chemie, 22204 Hamburg (DE)
(72) Erfinder: Meyer, Arnold, D-2220 St. Michaelisdonn (DE); Noweck, Klaus F., Dr., D-2212 Brunsbüttel (DE); Schiefler, Jan L., D-2000 Hamburg 52 (DE); Svensson, Anders, Växjo (SE)
(74) Vertreter: Schupfner, Gerhard D.

(56) Entgegenhaltungen:
- EP-A- 0 169 430
- GB-A- 2 147 575
- US-A- 4 380 495
- US-A- 4 504 395
- CHEMICAL ABSTRACTS, Band 104, Nr. 10, Zusammenfassung Nr. 74285j, Columbus, Ohio, US; N. VOROB'EVA et al.: "Use of inorganic coagulants for purification of varnish plant wastewater"

## Beschreibung

Die Erfindung betrifft ein neues Lackentklebungs- und Sedimentationsmittel.

Bei der Sprühlackierung von Gegenständen wie Autokarosserien oder anderen Geräten in Sprühkammern oder Spritzkabinen wird der entstehende Lack- oder Farbnebel durch einen Luftstrom zur Reinigung mit Umlaufwasser oder einem Wasservorhang in Kontakt gebracht oder durch andere Farbnebel-Naßabscheider entfernt. Damit sich in dem Waschsystem keine klebenden Lackreste ansammeln, die die Nebelabscheider, Sprühköpfe und Umwälzpumpen verstopfen können, verwendet man zum Ausfällen und Koagulieren der Lackpartikel in dem Waschwasser Lackentklebungs- und Sedimentationsmittel, die einen leicht entfernbaren und nichtklebenden schlammartigen Rückstand hinterlassen sollen.

Als Koaguliermittel hat man die verschiedensten Zusätze wie Natronlauge, gegebenenfalls mit Mineralöl, mit Wachsdispersionen, mit Silikaten und Phosphaten und ferner Marmorkalkhydrat mit Zusätzen von Zellulose und Montmorillonit oder Spectit z.B. gemäß DE-A-23 47 068 und DE-A-34 21 270 verwendet. In jüngster Zeit werden Lackentklebungsmittel insbesondere für Farben mit einem hohen Feststoffanteil z.B. gemäß US-A-4 564 464 und US-A-4 504 395 eingesetzt, die als wesentliche Komponente Bentonite, insbesondere Hektorit enthalten und aus wirtschaftlichen Gründe mit Montmorillonit-Tonen oder Tonerde verschnitten sind und übliche Schaumzusätze wie Schaumdrücker und andere Koagulierungsmittel enthalten.

EP-A-0 169 430 offenbart ein Sedimentationsmittel zur Klärung von verfärbten Abwässern bestehend aus Tonerde oder einem Gemisch von Tonerde und Bauxit, dessen Teilchen kleiner als 0,2 mm sind.

Alle die bislang bekannnten Lackentklebungsmittel haben den Nachteil, daß sie auf die verschiedenen Lacke auf Basis von Nitro, Polyacrylat, Polyester oder Polyurethan und auf Wachse verschieden ansprechen oder bei Lacken mit hohem Feststoffgehalt, den heutzutage hauptsächlich verwendeten "High-Solids" Lacken, unwirtschaftlich sind und in einer Menge bis zu 50 Gew.% bezogen auf das Gewicht der aufgesprühten Lacke eingesetzt werden müssen. Ferner bestehen die bislang bekannten Lackentklebungsmittel aus Mehrkomponentenmischungen, deren Herstellung bzw. Formulierung aufwendig ist und die bei längerem Lagern auch zu einer Entmischung der Bestandteile führen können.

Der Erfindung liegt die Aufgabe zugrunde, ein neues Lackentklebungs- und Sedimentationsmittel vorzuschlagen, welches die Entklebung aller heute insbesondere in der Automobilfertigung verwendeter Lacksorten auf wirtschaftliche Weise ermöglicht und einfach herzustellen ist.

Zur Lösung der Aufgabe wird daher ein Lackentklebungsmittel gemäß Hauptanspruch vorgeschlagen, wobei besonders bevorzugte Ausführungsformen in den Unteransprüchen aufgeführt sind; ferner wird die Verwendung eines derartigen Lackentklebungs- und Sedimentationsmittels vorgeschlagen, das in einer Menge von 1 bis 10 Gew.% bezogen auf das Gewicht des zu entklebenden Lackes verwendet wird; es wird vorzugsweise als 5 bis 30%ige wäßrige Dispersion oder in trockener Form dem Umlaufwasser einer Lackspritzkabine zugeführt.

Überraschenderweise hat sich gezeigt, daß ein Lackentklebungsmittel mit einem Gehalt von 60 bis 80 Gew.% Tonerde (Al₂0₃) in Pseudoböhmit- oder Böhmitform entweder in röntgenamorpher Form oder mit einer Kristallitgröße von 2 bis 15 nm die in Wasser oder in Säuren mit Partikelgrößen von 10 bis 1000 nm dispergierbar ist bei sehr viel geringeren Einsatzmengen im Vergleich zu Bentonit enthaltenden Präparaten wirksam ist, und zwar gegenüber den verschiedensten Lacken, Farben oder anderen aufsprühbaren Beschichtungsmitteln.

Besonders bevorzugt sind die in Wasser oder Säuren dispergierbaren Tonerden, die durch Aluminiumalkoholat-Hydrolyse im pH-Bereich von 1 bis 11 erhalten worden sind.

Die erfindungsgemäßen Lackentklebungsmittel, deren Hauptanteil von 60 bis 80 Gew.% aus dieser dispergierbaren Tonerde besteht, können noch 20 bis 40 Gew.% Wasser enthalten, das zum Teil kristallographisch oder physikalisch gebunden ist. Ferner können die erfindungsgemäßen Lackentklebungsmittel 0 bis 10 Gew.% und vorzugsweise 3 bis 6 Gew.% Säuren wie Salzsäure, Salpetersäure, Ameisensäure, Essigsäure, Milchsäure, Chloressigsäure und/oder Propionsäure enthalten, die als Gegenion die entsprechend äquivalente Menge Aluminiumionen oder Tonerde beanspruchen. Ferner können die Lackentklebungsmittel gegebenenfalls noch übliche Schaumdrücker enthalten.

Zur Herstellung der dispergierbaren Tonerde hydrolisiert man entweder die bei der synthetischen Fettalkoholherstellung nach Ziegler, dem sogenannten Alfol-Verfahren erhaltenen oder die durch direkte Synthese nach DE-A-32 44 972 hergestellten Aluminiumalkoholate in einem pH-Bereich von 1 bis 9 und vorzugsweise 6 bis 9 mit Wasser. Hierbei erhält man eine in verdünnten Säuren dispergierbare Tonerde, also Tonerdeagglomerate, die sich durch verdünnte Säuren wie beispielsweise Salzsäure, Salpetersäure, Essigsäure, Ameisensäure, Propionsäure, Chloressigsäure und Milchsäure in ihre Primärteilchen zerlegen lassen.

Statt die erhaltenen Tonerden in Säure zu dispergieren, kann man auch die betreffenden Säuren auf die Tonerdeagglomerate aufdüsen und somit in Wasser direkt dispergierbare Tonerden einsetzen.

Die anfallende Tonerde kann auch durch Anlagern der gasförmigen Säuren gemäß DE-A-24 08 233 hergestellt werden.

Falls elektrolytfreie Dispersionen eingesetzt werden sollen, können die hydrolysierten Tonerden auch durch Anwendung hoher Scherkräfte wie beispielsweise mittels Kolloidmühlen zu elektrolytfreien Dispersionen verarbeitet werden.

Die durch Hydrolyse hergestellten Tonerden können bei entsprechender Behandlung auch durch Fällung aus Aluminat und Aluminiumsalzen hergestellt werden.

Die eingesetzten Tonerden liegen in der Pseudoböhmit- oder Böhmitstruktur entweder mit röntgenamorphem Charakter vor oder haben eine primäre Kristallitgröße von 20 bis 150 Å gemessen am 1.2.0. - Reflex mittels Röntgenbeugung. Die in der Dispersion entstehenden Teilchen haben eine Größe im Bereich von 10 bis 1000 nm und liegen mit einer Menge von 90 Gew.% vorzugsweise in einem Bereich von 10 bis 100 nm.

### Beispiel 1

25 kg Pseudoböhmit-Tonerde aus der neutralen Aluminiumalkoholathydrolyse wurden mit 4 kg einer 37 %igen Salzsäure besprüht und gemischt.

Das erhaltene Produkt wurde einmal in 20 %iger Dispersion und zum anderen in trockener Form dem Umlaufwasser einer Lackspritzkabine zugesetzt. Die eingesetzte dispergierbare Tonerde enthielt 60 Gew.% Al₂0₃, 35 Gew.% H₂0 und 5 Gew.% Chlorid-Ionen.

Als Testsprühkammer wurde eine übliche Laborkammer verwendet, die einen Kreislaufwasserbehälter von 240 Liter Fassungsvermögen besaß; das Wasser wurde mit einer Strömungsgeschwindigkeit von 200 l/min umgewälzt. Die Luftgeschwindigkeit in der Kammer betrug 0,5 m/s. Der Lack wurde unter einem Druck von 5 bar mit einer Sprühdüse K960 einer Sprühpistole des Types Benks 920 eingesprüht. Als Lackart wurde ein Lack der Bezeichnung "Becker 880DJ-White" verwendet, der aus einer in organischen Lösungsmitteln gelösten Butylglykolat-, Alkyl- und Melaminharzmischung bestand.

Es wurde jeweils die versprühte Lackmenge bestimmt und ferner der Anteil an Entklebungsmittel der je kg Lack zur Erzielung einer vollständigen Entklebung erforderlich war.

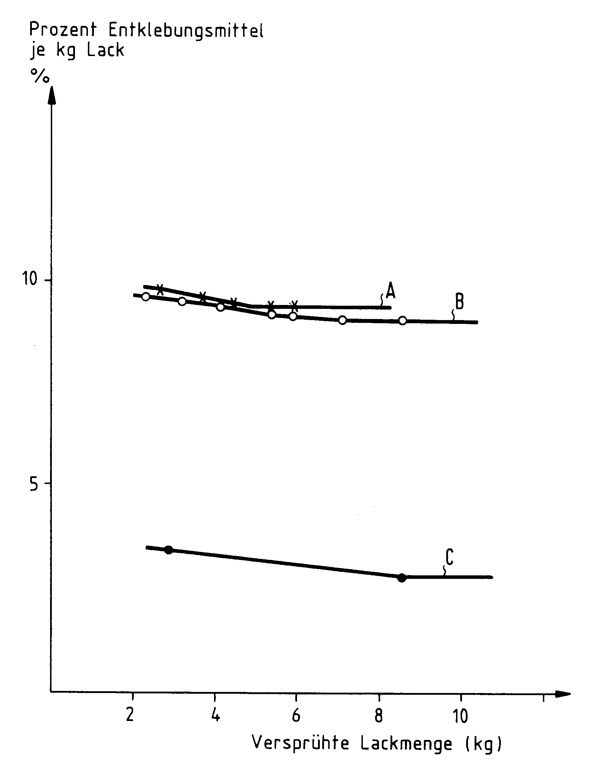

Zu Vergleichszwecken wurde das beispielsgemäße Produkt C mit zwei verschiedenen Bentonitsystemen, nämlich einem Bentonit A (Handelsname "IPAFLOC") und einem Bentonit B (Produkt VR 7821-2 der Henkel KGaA) untersucht. Die Ergebnisse zeigen die beiliegende Figur 1, in der die insgesamt versprühte Lackmenge in kg und das zur vollständigen Sedimentation erforderliche Entklebungsmittel in Prozent je kg versprühter Lackmenge aufgetragen sind.

Bei diesem Versuch in einer Versuchskammer, in der keine Gegenstände mit Lack besprüht wurden, entspricht die angegebene Lackmenge der beim tatsächlichen Lackieren anfallenden Menge an nicht aufgetragenem Lack, dem sogenannten "Over-Spray".

Im einzelnen wurde der Versuch in der Testsprühkammer so durchgeführt, daß je kg Lack etwa 30 - 40 g Tonerde in den Kreislaufwassertank dosiert und dort aufgerührt wurden. Dann sprühte man kontinuierlich etwa 3 kg/h Lack aus der Sprühpistole in die Kammer, bis der Lack klebrig wurde. Dieses wurde, von Hand durch Verpressen des Schlammes geprüft. Wenn dieser Punkt erreicht war, wurden der Lackverbrauch notiert und neue Tonerde bzw. die Bentonit-Vergleichsprodukte zugefügt. Dieser Vorgang wurde mehrmals wiederholt. Hierbei zeigte sich, daß mit dem erfindungsgemäßen Produkt C bereits 3 bis 4 Gew.% Aktivsubstanz je kg versprühten Lackes ausreichten, während bei den Vergleichsprodukten A und B etwa 9 bis 10 Gew.% je kg Lack zur Erzielung der gleichen Wirkung nötig waren.

Die graphische Darstellung Figur 1 zeigt eindeutig das sehr viel bessere Verhalten des erfindungsgemäßen Lackentklebungsmittels gegenüber handelsüblichen Bentoniten, die in etwa 3facher Menge eingesetzt werden mußten, um den gleichen Wirkungsgrad zu erzielen.

### Beispiel 2

Es wurden die verschiedensten Lacke gemäß Tabelle I analog Beispiel 1 behandelt, deren Verhalten in der folgenden Tabelle II aufgeführt ist.

**Tabelle I**

| Lack | Zusammensetzung |
|---|---|
| A | Alkyd/Melamin-Harze, in organischen Lösungsmitteln gelöst |
| B | Mischung aus Polyesterharzen und Polyvinylbutyrol (mit Metall-Effekt) |
| C | Urethan "Anti-chip primer"; Mischung aus Polyurethanharzen und organischen Lösungsmitteln |
| D | Acrylharz-/Melaminharz-Mischung in organischen Lösungsmitteln ("European Acrylic Clear coat") |
| E | Acrylharz mit Isocyanathärtern in organischen Lösungsmitteln ("U.S. Acrylic Clear coat") |
| F | Alkydharz-/Melaminharzmischung in organischen Lösungsmitteln ("Alkyd/Melamine Orange") |
| G | Mischung aus Harzen in Wasser ("Waterbased metallic Atlas grey") |
| H | Butylglykolat-/Alkydharz-Melaminharz-Mischung in organischen Lösungsmitteln ("Basecoat, white, Becker 880 DJ") |
| I | Acrylharz mit Isocyanathärter in organischen Lösungsmitteln ("2-component Urethane clearcoat") |

In der folgenden Tabelle II ist das Verhalten der verschiedenen Entklebungsmittel einmal durch Bemerkungen erläutert und allgemein wie folgt gekennzeichnet:

| | |
|---|---|
| + | Entklebung des Lackes, |
| ++ | Entklebung und Absetzen des Lackes, |
| +++ | Entklebung und Absetzen des Lackes, gute Dispergierbarkeit von Lack und Schlamm |
| - | unzureichende Entklebung. |

Der Zusatz eines Entschäumers, wie z.B. Antifoam von Diamond Shamrock, Foamaster 226 und von üblichen polymeren Entflockungsmitteln wie Praestol 2415 war in einigen Fällen hilfreich, jedoch nicht unbedingt erforderlich.

**Tabelle II**

| Lack | mit Tonerde gemäß Erfindung | mit Bentonit-Tonen |
|---|---|---|
| A | +++ | ++ |
| | gute Entklebung | verklumpbar, jedoch schlecht pumpbar |
| B | +++ | ++ |
| | gute Entklebung | zufriedenstellend |
| C | +++ | - |
| | gut entklebt und suspendiert | sehr klebrig |
| D | +++ | + / - |
| | problemlos | kaum entklebt, klebriges Sediment |
| E | +++ | - |
| | gute Entklebung bei etwas höherem Verbrauch | sehr klebrig |
| F | +++ | ++ |
| | gute Entklebung | annehmbar entklebt |
| G | +++ | ++ |
| | längere Absetzzeit bei Fehlen von Entschäumern | längere Absetzzeit |
| H | +++ | - |
| | ausgezeichnete Dispergierung und gute Entklebung | klebrig, setzt sich nicht ab |
| I | +++ | - |
| | gute Entklebung bei etwas höherem Verbrauch | äußerst klebrig. |

## Patentansprüche

1. Lackentklebungs- und Sedimentationsmittel, ggf. mit üblichen Zusätzen wie Schaumdrückern,
**dadurch gekennzeichnet**, daß es Tonerde mit 60 bis 80 Gew.% Al₂O₃ in Pseudoböhmit- oder Böhmitform entweder in röntgenamorpher Form oder mit einer Kristallitgröße von 2 bis 15 nm enthält, die in Wasser oder wäßrigen Säuren zu Partikelgrößen von 10 bis 1000 nm dispergierbar ist.

2. Lackentklebungs- und Sedimentationsmittel nach Anspruch 1, **dadurch gekennzeichnet**, daß die Tonerde mit Säuren besprüht oder mit gasförmigen Säuren behandelt worden ist.

3. Lackentklebungs- und Sedimentationsmittel nach Anspruch 2, **dadurch gekennzeichnet**, daß als Säure Salzsäure, Salpetersäure, Ameisensäure, Essigsäure, Propionsäure, Chloressigsäure und/oder Milchsäure eingesetzt worden ist.

4. Verwendung eines Lackentklebungs- und Sedimentationsmittels nach einem der Ansprüche 1 bis 3,
**dadurch gekennzeichnet**, daß es als 5 bis 30 %ige wäßrige Dispersion oder in trockener Form dem Umlaufwasser einer Lackspritzkabine zugeführt und in einer Menge von 1 bis 10 Gew.% bezogen auf das Gewicht des zu entklebenden Lackes eingesetzt wird.

## Claims

1. A tack remover and precipitant for enamels, optionally with customary additives, e.g. defoamers, which comprises an alumina containing 60 to 80 weight percent Al₂O₃ in pseudoboehmite or boehmite form, either in X-ray amorphous form or with 2 to 15 nm-sized crystallites which can be dispersed in water or aqueous acids to form particles of 10 to 1,000 nm size.

2. The tack remover and precipitant for enamels according to claim 1 wherein the alumina has been sprayed with acids or has been treated with gaseous acids.

3. The tack remover and precipitant for enamels according to claim 2 wherein the acid used is hydrochloric acid, nitric (V) acid, formic acid, acetic acid, propionic acid, chloroacetic acid and/or lactic acid.

4. The use of the tack remover and precipitant for enamels according to any one of claims 1 to 3, wherein said agent is added as a 5 to 30 % aqueous dispersion or in dry form to the recycle water in a spray booth and in quantities of 1 to 10 weight percent, referring to the weight of the lacquer to be detackified.

## Revendications

1. Agent de suppression du pouvoir collant et de sédimentation de peintures, comprenant éventuellement des additifs classiques tels que des suppresseurs de mousse, caractérisé en ce qu'il contient de l'alumine à 60-80 % de Al₂O₃ sous forme de pseudoböhmite ou de böhmite, sous une forme amorphe aux rayons X ou avec une dimension des cristallites de 2 à 15 nm, qui peut être dispersée dans l'eau ou dans des acides aqueux en particules de 10 à 1000 nm de diamètre.

2. Agent de suppression du pouvoir collant et de sédimentation de peintures suivant la revendication 1, caractérisé en ce que l'alumine a été traitée par pulvérisation avec des acides ou traitée avec des acides gazeux.

3. Agent de suppression du pouvoir collant et de sédimentation de peintures suivant la revendication 2, caractérisé en ce que de l'acide chlorhydrique, de l'acide nitrique, de l'acide formique, de l'acide acétique, de l'acide propionique, de l'acide chloracétique et/ou de l'acide lactique ont été utilisés comme acide.

4. Utilisation d'un agent de suppression du pouvoir collant et de sédimentation de peintures suivant l'une des revendications 1 à 3, caractérisée en ce qu'on fait arriver cet agent sous forme de dispersion aqueuse à 5-30 % ou sous forme sèche à l'eau de circulation d'une cabine de pulvérisation de peinture et on l'utilise en une quantité de 1 à 10 % en poids par rapport au poids de la peinture dont on veut supprimer le pouvoir collant.
